# EUROPÄISCHE PATENTSCHRIFT

(11) **EP 0 884 271 B1**
(45) Veröffentlichungstag und Bekanntmachung des Hinweises auf die Patenterteilung: **22.11.2000**
(21) Anmeldenummer: 98109801.5
(22) Anmeldetag: 28.05.1998
(51) Int. Cl.: C01B 3/32

(54) **Verfahren zum Betrieb einer Methanolreformierungsanlage**
Process for operating a methanol reforming apparatus
Procédé pour opérer un dispositif de reformage de méthanol

(30) Priorität: 13.06.1997 DE 19725007
(43) Veröffentlichungstag der Anmeldung: 16.12.1998
(73) Patentinhaber: XCELLSIS GmbH, 73230 Kirchheim / Teck-Nabern (DE)
(72) Erfinder: Autenrieth, Rainer, 89155 Erbach (DE); Christen, Andreas, 53940 Kehr (DE); Schüssler, Martin, 89077 Ulm (DE); zur Megede, Detlef, Dr., 89347 Bubesheim (DE)

(56) Entgegenhaltungen:
- DE-A- 3 314 131
- DE-B- 1 246 688
- DE-C- 19 534 433
- US-A- 4 855 267
- US-A- 5 075 268
- Y. NAKAZAKI ET AL.: "Highly selective decomposition of methanol to syngas on nickel-based composite catalysts using an artificial intelligence control reactor system" INDUSTRIAL & ENGINEERING CHEMISTRY RESEARCH., Nr. 28, 1989, Seiten 1285-1289, XP002075330 WASHINGTON US
- PATENT ABSTRACTS OF JAPAN vol. 007, no. 165 (M-230), 20. Juli 1983 & JP 58 072666 A (NISSAN JIDOSHA KK), 30. April 1983

## Beschreibung

Die Erfindung bezieht sich auf ein Verfahren zum Betrieb einer Methanolreformierungsanlage nach dem Oberbegriff des Anspruchs 1.

Verfahren zur katalytischen Methanolreformierung sind bekannt und dienen beispielsweise zur Erzeugung von Wasserstoff für die Brennstoffzellen eines brennstoffzellenbetriebenen Kraftfahrzeuges mittels Wasserdampfreformierung von flüssig mitgeführtem Methanol. Als Katalysatormaterial eignet sich beispielsweise ein katalytisch aktives Cu/ZnO-Material auf einem Aluminiumoxidträger. Weitere verwendbare Katalysatorzusammensetzungen sind zum Beispiel in den Offenlegungsschriften DE 35 31 757 A1 und EP 0 201 070 A1 beschrieben. Meist wird das Katalysatormaterial in Form einer Pelletschüttung in den Reformierungsreaktionsraum des betreffenden Methanolreformierungsreaktors eingebracht.

Es ist eine bekannte Tatsache gängiger Methanolreformierungskatalysatoren, daß sie während des Reformierungsreaktionsbetriebes eine Abnahme ihrer spezifischen Aktivität zeigen. Dies gilt besonders beim Betrieb mit hoher Belastung, wie er in mobilen Anwendungen wünschenswert ist. Für dieses Einsatzgebiet wird aus Platz- und Gewichtsgründen ein besonders kompakter Aufbau des Reaktors angestrebt, der dann zur Erzielung der geforderten Umsatzleistung mit entsprechend hoher Belastung betrieben wird.

Ein öfterer Austausch des Katalysatormaterials ist unter Berücksichtigung der für Kraftfahrzeugnutzer gewohnten Mobilitäts- und Serviceerwartungen nur schwerlich akzeptabel.

Es sind bereits unterschiedliche Verfahren zur Aufrechterhaltung einer hohen katalytischen Aktivität bzw. zur Erzielung einer hohen Lebensdauer des Methanolreformierungskatalysators vorgeschlagen worden. So wird in der Offenlegungsschrift JP 4-141234 (A) zur Gewinnung eines Katalysators mit langer Lebensdauer sowie hoher Aktivität und Selektivität eine spezielle Rezeptur verschiedener Metalloxide angegeben.

In der Offenlegungsschrift JP 63-310703 (A) wird das Katalysatormaterial im Reformierungsreaktionsraum eines Methanolreformierungsreaktors vor Beginn des Reformierungsreaktionsbetriebes einer Reduktionsreaktion unterzogen, die zu einer Volumenabnahme des Katalysators führt. Eine druckfederbelastete, bewegliche Deckplatte hält das als Pelletschüttung in den Reaktionsraum eingebrachte Katalysatormaterial als dichte Packung zusammengedrückt. Die Reduktionsreaktion ist ein für den Betrieb eines Cu-Katalysators notwendiger Vorgang. Der dabei auftretende Volumenschwund ist deutlich geringer als der Volumenschwund, der während des normalen Reformierungsbetriebs auftritt.

In der Offenlegungsschrift JP 63-315501 (A) wird das Einbringen einer Luftkammer zwischen einen Brenner und einen Reformierungsreaktionsraum vorgeschlagen, über die in kontrollierter Weise Luft zuführbar ist, um die Katalysatortemperatur auf einem vorgegebenen Wert zu halten.

Bei einem in der Offenlegungsschrift DE 33 14 131 A1 offenbarten Verfahren wird zur Verlängerung der Lebensdauer des Methanolreformierungskatalysators das Methanol von darin ggf. enthaltenen Chlorverbindungen befreit, bevor es mit dem Katalysator in Kontakt gebracht wird.

Ein Verfahren der eingangs genannten Art ist in der Auslegeschrift DE 1 246 688 angegeben. Gemäß diesem Verfahren wird der Reformierungsreaktionsbetrieb periodisch für Katalysatorreaktivierungsphasen zwecks aktivitätsregenerierender Behandlung des Katalysators unterbrochen, wobei die aktivitätsregenerierende Behandlung darin besteht, den Katalysator einem sauerstoffhaltigen Gasstrom, z.B. Luft, bei einer erhöten Temperatur von vorzugsweise 150°C bis 450°C auszusetzen. Nach dieser Katalysatorregenerierung kann bei Bedarf vorgesehen sein, den Katalysator einem wasserstoffhaltigen Gas bei erhöhter Temperatur auszusetzen, um ihn zu reaktivieren, bevor wieder mit der Reformigungsreaktion begonnen wird. Eine aktivitätsregenerierende Behandlung eines Methanolreformierungskatalysators dadurch, daß dieser einem sauerstoffhaltigen Gasstrom mit einer molekularen Sauerstoffkonzentration von höchstens 5 Molprozent, in einem Vergleichsbeispiel auch einem reinen Stickstoff-Inertgasstrom ausgesetzt wird, ist in der Offenlegungsschrift JP 4-200640 (A) bzw. der korrespondierenden Patentschrift US 5.075.268 offenbart.

Aus der Offenlegungsschrift DE 33 14 131 A1 ist es bekannt, über die Lebensdauer eines Methanolreformierungskatalysators hinweg die Reaktionstemperatur sukzessive zu erhöhen, um damit die nachlassende Katalysatoraktivität zu kompensieren.

In der Offenlegungsschrift JP 3-247501 (A) ist ein Verfahren zum Betrieb eines Methanolreformierungsreaktors beschrieben, das beim Abschalten des Reformierungsreaktors ein Spülen des Reformierungskatalysatorbettes mit reformiertem Gas unter hohem Druck beinhaltet. Damit soll eine Schwächung der Wirkung des Katalysators durch auf dem Katalysatorbett kondensierendes Methanol verhindert werden, wobei als herkömmliche Alternative zu diesem Vorgehen das Spülen mit Stickstoffgas erwähnt wird.

Der Erfindung liegt als technisches Problem die Bereitstellung eines Verfahrens der eingangs genannten Art zugrunde, durch das sich eine Methanolreformierungsanlage mit vergleichsweise geringem Aufwand über längere Betriebsdauern hinweg mit nicht merklich abfallender Reformierungsumsatzleistung betreiben läßt.

Die Erfindung löst dieses Problem durch die Bereitstellung eines Verfahrens zum Betrieb einer Methanolreformierungsanlage mit den Merkmalen des Anspruchs 1. Bei diesem Verfahren wird der Reformierungsreaktionsbetrieb periodisch für Katalysatorreaktivierungsphasen unterbrochen, während denen der im Reformierungsreaktionsbetrieb in seiner katalytischen Aktivität nachlassende Methanolreformierungskatalysator aktivitätsregenerierend behandelt wird. Durch die Zwischenschaltung solcher Reaktivierungsphasen läßt sich die ursprüngliche Aktivität des Katalysators wenigstens teilweise wiederherstellen, was insgesamt längere Betriebsdauern der Anlage ohne merklich nachlassende Reformierungsumsatzleistung und ohne die Notwendigkeit eines Katalysatoraustauschs ermöglicht. Die Reaktivierungsphasen können bei Einsatz der Anlage in Kraftfahrzeugen in den normalen Fahrbetrieb integriert werden.

Die Katalysatorreaktivierungsphasen beinhalten einen Reformierungsreaktionsbetrieb bei gegenüber dem sonstigen Reformierungsreaktionsbetrieb reduzierter Belastung und/oder höherer Temperatur. Als weitergehende Maßnahme wird bei einem nach Anspruch 2 ausgestalteten Verfahren eine dem Reaktor nachgeschaltete Gasreinigungsstufe während dieser Katalysatorreaktivierungsphanse mit einer gegenüber den Phasen des normalen Reformierungsreaktionsbetriebs erhöhten Leistung hinsichtlich CO-Umwandlung bzw. DO-Abtrennung betrieben. Dadurch läßt sich ein während der Reaktivierungsphasen gegebenenfalls erhöhter CO-Anteil im Reformatgasstrom kompensieren, so daß an der Austrittsseite der Gasreinigungsstufe während der Reaktivierungsphasen kein höherer CO-Anteil auftritt als im normalen Reformierungsreaktionsbetrieb.

Ein nach Anspruch 3 weitergebildetes Verfahren eignet sich für in Kraftfahrzeugen angeordnete Methanolreformierungsanlagen. Die Katalysatorreaktivierungsphase werden bei diesem Verfahren auf Fahreranforderung oder selbstätig durch sich ereignende Fahrzeugstillstandsphasen ausgelöst. Diese stellt eine Möglichkeit dar, die Katalysatorreaktivierungsphasen in den normalen Fahrbetrieb zu integrieren, ohne daß eigens für diesen Zweck der Fahrbetrieb des Fahrzeugs unterbrochen werden muß.

Als Ausführungsbeispiel sei stellvertretend für zahlreiche weitere mögliche Realisierungen der Erfindung eine in einem brennstoffzellenbetriebenen Kraftfahrzeug angeordnete Methanolreformierungsanlage erwähnt, mit welcher der für die Brennstoffzellen benötigte Waserstoff mittels Wasserdampfrefomierung von flüssig mitgeführtem Methanol erzeugt wird. Im Reformierungsreaktionsraum des zugehörigen Reformierungsreaktors befindet sich ein geeigneter Methanolreformierungskatalysator, z.B. ein Cu/ZnO/Al₂O₃-Katalysatormaterial in Form einer Pelletschüttung. An den Reaktor schließt sich eine Gasreinigungsstufe in Form einer CO-Umwandlungsstufe an, speziell eine CO-Oxidationsstufe, mit welcher der CO-Anteil in dem wasserstoffreichen, aus dem Reaktor austretenden Reformatgas auf einen für die anschließende Verwendung in den Brennstoffzellen ausreichend niedrigen Wert, z.B. kleiner als ungefähr 50ppm, verringert wird. Alternativ ist auch eine CO-Abtrennungsstufe als Gasreinigungsstufe einsetzbar. Derartige Methanolreformierungsanlagen sind in verschiedenen Typen bekannt und bedürfen daher hier keiner weiteren Erläuterung und zeichnerischen Darstellung.

Im normalen Reformierungsreaktionsbetrieb erzeugt die Anlage die gewünschte Menge an wasserstoffreichem Reformatgas mit ausreichend geringem CO-Gehalt. Dabei wird die Anlage im Reformierungsreaktionsbetrieb überwiegend bei maximaler Belastung gefahren, da sie aus Platz- und Gewichtsersparnisgründen bei gegebenem Leistungsbedarf möglichst kompakt gebaut ist. Gerade auch aufgrund dieser Betriebsart mit maximaler oder annähernd maximaler Belastung, d.h. unter Vollast, tritt mit zunehmender Betriebsdauer eine Abnahme der spezifischen katalytischen Aktivität des Methanolreformierungskatalysators auf. Um dennoch eine vergleichsweise lange Betriebsdauer der Anlage mit hoher Umsatzleistung ohne Austausch des Katalysators zu gewährleisten, wird der Reformierungsreaktiionsbetrieb periodisch für Katalysatorreaktivierungsphasen unterbrochen, während denen der Methanolreformierungskatalysator aktivitätsregenerierend behandelt wird, um dadurch seine anfängliche Aktivität wenigstens teilweise wiederherzustellen. Für diese aktivitätsregenerierende Behandlung sind verschiedene Vorgehensweisen möglich.

Eine erste Methode besteht darin, die Reformierungsanlage während der Katalysatorreaktivierungsphasen mit einer gegenüber derjenigen des Reformierungsreaktionsbetrieb geringeren Belastung zu fahren, d.h. im Teillastbereich statt im Vollastbereich. Typischerweise beträgt die für die Reaktivierungsphasen gewählte Belastung zwischen 0% und etwa 50% der maximal möglichen Belastung. Je geringer die Belastung in den Katalysatorreaktivierungsphasen eingestellt wird, umso größer ist bei sonst gleichen Bedingungen der aktivitätsregenerierende Effekt. Vorzugsweise wird zusätzlich zur Verringerung der Belastung für die Durchführung der Katalysatorreaktivierungsphasen die Temperatur im Reaktor und damit des Katalysatormaterials erhöht. Typischerweise wird dabei die Temperatur um ca. 10°C bis 50°C gegenüber der Temperatur während des Reformierungsreaktionsbetriebs gesteigert, die üblicherweise im Bereich von 200°C und darüber liegt. Je größer die Temperaturerhöhung bei sonst gleichen Bedingungen für die Katalysatorreaktivierungsphasen gewählt wird, umso größer ist der aktivitätsregenerierende Effekt. Je nach Anwendungsfall kommt anstelle dieser kombinierten Belastungsverringerung und Temperaturerhöhung für den Übergang vom Reformierungsreaktionsbetrieb zur Katalysatorreaktivierungsphase auch in Betracht, lediglich die Temperatur zu erhöhen.

Als begleitende Maßnahme wird während der Katalysatorreaktivierungsphasen die Gasreinigungsstufe vorzugsweise mit einer höheren Leistungsfähigkeit hinsichtlich der CO-Umwandlung bzw. CO-Abtrennung betrieben. Ein während der Reaktivierungsphasen im Vergleich zum normalen Reformierungsreaktionsbetrieb aufgrund einer vorgenommenen Temperaturerhöhung eventuell erhöhter CO-Gehalt im Reformatgas ausgangsseitig des Reaktors läßt sich auf diese Weise kompensieren. Beispielsweise kann bei Verwendung einer CO-Oxidationsstufe als Gasreinigungsstufe der sogenannte Luft-Lambdawert während der Katalysatorreaktivierungsphasen gegenüber dem Reformierungsreaktionsbetrieb erhöht werden. Dieser Luft-Lambdawert bestimmt die Menge an Sauerstoff, die dem Reformatgasstrom zwecks Oxidation des in letzterem enthaltenden Kohlenmonoxids zugeführt wird, wobei ein Lambdawert von eins das stöchiometrische Mengenverhältnis repräsentiert. Für den Reformierungsreaktionsbetrieb wird typischerweise ein Lambdawert von etwas größer als eins gewählt. Der erhöhte Luft-Lambdawert während der Katalysatorreaktivierungsphasen hat folglich die Einstellung eines erhöhten O₂-Überschusses in der CO-Oxidationsstufe zur Folge, wodurch diese in der Lage ist, den CO-Anteil im Reformatgasstrom während der Katalysatorreaktivierungsphasen auf denselben niedrigen Wert zu verringern wie im Reformierungsreaktionsbetrieb.

Zur Auslösung einer jeweiligen Katalysatorreaktivierungsphase für die im Kraftfahrzeug befindliche Anlage stehen mehrere Varianten zur Verfügung. Zum einen kann die Möglichkeit einer fahrerangeforderten Auslösung vorgesehen sein, beispielsweise über eine entsprechende Bedientaste. Der Kraftfahrzeugnutzer kann dann z.B. jeweils nach Abstellen des Kraftfahrzeuges durch Betätigung der Bedientaste eine Katalysatorreaktivierungsphase auslösen. Zusätzlich oder alternativ zu dieser Maßnahme kann eine selbstätige Auslösung der Katalysatorreaktivierungsphasen vorgesehen sein, beispielsweise immer dann, wenn sich Fahrzeugstillstandsphasen ergeben, d.h. wenn das Fahrzeug seit einer vorgebbaren Zeitdauer steht, z.B. wegen eines Ampelstops oder eines Staus. Von hierzu fahrzeugseitig vorgesehenen Detektionsmitteln wird das Auftreten solcher Fahrzeugsstillstandsphasen selbstätig erfaßt, wonach die Detektionsmittel dann die jeweilige Katalysatorreaktivierungsphase für die Methanolreformierungsanlage auslösen. Bei Bedarf können sowohl die automatische als auch die fahrerangeforderte Auslösung von Katalysatorreaktivierungsphasen realisiert sein. In jedem Fall ist es möglich, die Katalysatorreaktivierungsphasen in den laufenden Fahrbetrieb zu integrieren, ohne denselben nur für diesen Zweck unterbrechen zu müssen.

Es versteht sich, daß die Reaktivierungsphasen nur jeweils so lange durchgeführt zu werden brauchen, bis die anfängliche Katalysatoraktivität weitestgehend wieder hergestellt ist oder sich jedenfalls keine wesentliche Aktivitätssteigerung mehr ergibt. Dabei werden die Katalysatorreaktivierungsphasen jedoch gegebenenfalls vorzeitig beendet, wenn dies durch den vom Fahrer gesteuerten Fahrbetrieb veranlaßt wird, d.h. wenn die Methanolreformierungsanlage zur Bereitstellung der momentan benötigten Wasserstoffmenge für die Brennstoffzellen im Vollastbereich bei der optimalen Methanolreformierungstemperatur und damit im Reformierungsreaktionsbetrieb gefahren werden muß.

Die obige Beschreibung eines vorteilhaften Verfahrensbeispiels zeigt, daß sich mit dem erfindungsgemäßen Verfahren eine Methanolreformierungsanlage über längere Betriebsdauern hinweg mit im wesentlichen gleichbleibend hoher Katalysatoraktivität und damit Reformierungsumsatzleistung betreiben läßt, auch wenn die Anlage dabei häufig im Vollastbereich gefahren wird. Ein häufigerer Austausch des Katalysatormaterials im Reaktor ist durch die aktivitätsregenerierenden Behandlungen des Methanolreformierungskatalysators während der Katalysatorreaktivierungsphasen nicht erforderlich, wobei diese Reaktivierungsphasen im Fall des Einsatzes der Anlage in einem Kraftfahrzeug ohne Störung des laufenden Fahrbetriebs des Fahrzeuges durchgeführt werden können. Dies erfüllt die Mobilitäts- und Serviceerwartungen, an die Kraftfahrzeugnutzer herkömmlicherweise gewohnt sind, was diesbezügliche Akzeptanzprobleme vermeidet.

## Patentansprüche

1. Verfahren zum Betrieb einer Methanolreformierungsanlage, bei dem
- im Reformierungsreaktionsbetrieb Methanol in einem Methanolreformierungsreaktor unter Verwendung eines Methanolreformierungskatalysators reformiert wird, und
- der Reformierungsreaktionsbetrieb periodisch für Katalysatorreaktivierungsphasen unterbrochen wird, während denen der im Reformierungsreaktionsbetrieb in seiner katalytischen Aktivität nachlassende Methanolreformierungskatalysator aktivitätsregenerierend behandelt wird.
**dadurch gekennzeichnet, daß**
- die Katalysatorreaktivierungsphasen einen Reaktorbetrieb bei gegenüber dem Reformierungsreaktionsbetrieb reduzierter Belastung und/oder höherer Temperatur beinhalten.

2. Verfahren nach Anspruch 1, weiter
**dadurch gekennzeichnet, daß**
während der Katalysatorreaktivierungsphasen mit reduzierter Belastung und/oder höherer Temperatur eine dem Reaktor nachgeschaltete, den Kohlenmonoxidanteil im Reformatgas verringernde Gasreinigungsstufe mit einer erhöhten Leistung hinsichtlich des Kohlenmonoxidanteils im Reformatgas betrieben wird.

3. Verfahren nach Anspruch 1 oder 2, weiter
**dadurch gekennzeichnet, daß**
es für eine in einem Kraftfahrzeug angeordnete Methanolreformierungsanlage dient und die Katalysatorreaktivierungsphasen auf Fahreranforderung oder selbstätig durch eintretende Fahrzeugstillstandsphasen ausgelöst werden.

## Claims

1. A process for the operation of a methanol reforming device in which
- methanol is reformed in a methanol reforming reactor using a methanol reforming catalyst in reforming reaction mode and
- reforming reaction mode is periodically interrupted by catalyst reactivation phases during which the methanol reforming catalyst which loses catalytic activity during reforming reaction mode is treated to regenerate its activity,
**characterised in that**
- the catalyst reactivation phases of reactor operation involve lower loads and/or higher temperatures than reforming reaction mode.

2. A process in accordance with Claim 1.
**characterised in that**
during the catalyst reactivation phases with reduced load and/or higher temperature a gas cleaning stage fitted downstream of the reactor which reduces the carbon monoxide content in the reformate gas is operated with an increased output in relation to the carbon monoxide content in the reformate gas.

3. A process in accordance with Claim 1 or 2,
**characterised in that**
it is used for a methanol reforming device fitted in a motor vehicle and the catalyst reactivation phases can be actuated by driver request or automatically during phases in which the vehicle is at a standstill.

## Revendications

1. Procédé de fonctionnement d'une installation de reformage de méthanol, dans lequel
- lorsque la réaction de reformage est en oeuvre, le méthanol situé dans un réacteur de reformage de méthanol est reformé, avec utilisation d'un catalyseur de reformage de méthanol, et
- le fonctionnement de la réaction de reformage est interrompu périodiquement, pour procéder à des phases de réactivation du catalyseur, phases pendant lesquelles, lorsque la réaction de reformage est en oeuvre, le catalyseur de reformage du méthanol, dont l'activité catalytique diminue, est traité dans le sens d'une régénération de l'activité,
caractérisé en ce que
- les phases de réactivation du catalyseur comprennent un fonctionnement du réacteur à une charge réduite et/ou à une température supérieure par rapport aux conditions de fonctionnement de la réaction de reformage.

2. Procédé selon la revendication 1, caractérisé en outre en ce que, pendant les phases de réactivation du catalyseur, se faisant à charge réduite et/ou à température augmentée, un étage d'épuration de gaz, diminuant la proportion de monoxyde de carbone dans le gaz de reformat, installé en aval du réacteur, est mis en fonctionnement à une puissance augmentée, eu égard à la proportion de monoxyde de carbone dans le gaz de reformat.

3. Procédé selon la revendication 1 ou 2, caractérisé en outre en ce qu'il est utilisé pour une installation de reformage du méthanol, disposée dans un véhicule automobile, et les phases de réactivation du catalyseur sont déclenchées à la demande du conducteur ou bien automatiquement, par passage aux phases d'arrêt du véhicule.
